# EUROPÄISCHE PATENTSCHRIFT

(11) **EP 1 468 762 B1**
(45) Veröffentlichungstag und Bekanntmachung des Hinweises auf die Patenterteilung: **01.03.2006**
(21) Anmeldenummer: 03009079.9
(22) Anmeldetag: 19.04.2003
(51) Int. Cl.: B22D 17/20, B05B 15/06, F16K 11/074

(54) **Sprühkopf für ein Formsprühwerkzeug**
Sprayer head for a mould sprayer
Tête de pulvérisation pour un pulvérisateur de moules

(43) Veröffentlichungstag der Anmeldung: 20.10.2004
(73) Patentinhaber: Oskar Frech GmbH + Co. KG, 73614 Schorndorf (DE)
(72) Erfinder: Erhard, Norbert, Dr.-Ing., 73547 Lorch (DE); Pschenitschni, Hubert, 73650 Winterbach (DE)
(74) Vertreter: Patentanwälte Ruff, Wilhelm, Beier, Dauster & Partner

(56) Entgegenhaltungen:
- DE-A- 3 741 474
- DE-A- 4 016 377
- US-A- 4 760 961
- US-A- 5 603 984
- US-A- 5 916 367
- US-A1- 2002 124 895

## Beschreibung

Die Erfindung betrifft einen Sprühkopf für ein Formensprühwerkzeug, mit an einem verfahrbaren Arm anbringbaren Anschlussstück mit mehreren Durchgangskanälen jeweils für die gesteuerte Zufuhr der Sprühmedien sowie mit vom Anschlussstück aus quer zur Bewegungsrichtung des Armes abragenden, zu in Sprühkreisgruppen zusammengefassten Sprühdüsen führenden Verbindungsstücken, die über Verbindungskanäle mit den Durchgangskanälen des Anschlussstückes in Verbindung stehen.

Ein Sprühkopf dieser Art, der modular aufgebaut ist, ist aus der US-A 4 760 961 bekannt. Dort hat man durch lineares Aneinandersetzen einer Vielzahl von identischen Sprühkopfmodulen einen aus variablen vertikalen und horizontalen Säulen aufgebauten Sprühkopf geschaffen, dessen Sprühdüsenanordnung im wesentlichen in einer Ebene liegt. Eine Anpassung an die Tiefe der sich gegenüberliegenden festen Formenhälfte und der beweglichen Formenhälfte ist nicht oder nur durch die Verwendung von Verlängerungsrohren für die Düsen möglich. Es ist bekannt, dass solche Verlängerungsrohre im Dauerbetrieb dazu neigen, in ihrer Position verstellt zu werden, so dass gewisse Nachteile beim Sprühvorgang eintreten können.

Aus der EP 0 724 486 B1 ist aber auch ein Sprühkopf bekannt geworden, bei dem man durch die Anordnung von Distanzstücken auch den Abstand von Sprühplatten zum verfahrbaren Arm in Richtung zu den Formenhälften unterschiedlich gestalten kann. Neben der Anpassung von Sprühmodulen in Plattenform in Ebenen, die parallel zwischen den Formenhälften verlaufen, ist so auch der senkrecht dazu gemessene Abstand der Sprühmodulanordnung, die jeweils der festen bzw. der beweglichen Form zugewandt ist, unterschiedlich anzuordnen. Auch in diesem Fall aber können die Sprühmodule jeweils nur in ihren Ebenen, die parallel zu einer Mittelebene zwischen den Formenhälften verlaufen, weitgehend beliebig angeordnet werden. Bei tiefen Formen muss auch in diesem Fall der Einsatz von Verlängerungsrohren vorgesehen werden.

Bei allen bisher bekannten Sprühwerkzeugen sind in der Regel mehrere Sprühkreise vorgesehen, wobei jeder dieser Sprühkreise eine beliebige Anzahl von Sprühdüsen speist, die zeitlich unabhängig voneinander angesteuert werden können. Die Position der Sprühkreise folgt dabei einem bei der Entwicklung vorgegebenen Muster. Bei einem Sprühwerkzeug mit beispielsweise vier Sprühkreisen sind die beiden ungeraden Sprühkreise, also der Sprühkreis 1 und der Sprühkreis 3, der beweglichen Formhälfte zugewandt und die Sprühkreise 2 und 4 besprühen die feste Formhälfte.

Der vorliegenden Erfindung liegt die Aufgabe zugrunde, einen Sprühkopf der eingangs genannten Art so auszubilden, dass beide Sprühkopfseiten, die also zum einen der festen Formhälfte, zum anderen der beweglichen Formhälfte zugewandt sind, mit Sprühdüsenanordnungen versehen werden können, die nicht nur in einer parallel zur Mittelebene zwischen den Formenhälften verlaufenden Ebene liegen. Zum anderen soll auch die Möglichkeit geschaffen werden, die den einzelnen Formenhälften zugewandten Sprühkreise frei wählbar zu gestalten.

Zur Lösung dieser Aufgabe wird bei einem Sprühkopf der eingangs genannten Art vorgesehen, dass das Anschlussstück aus mehreren in der Bewegungsrichtung des Armes aneinander setzbaren Verteilerblöcken aufgebaut ist, in denen von allen Durchgangskanälen quer abzweigende Medienkanäle in einer vorbestimmten Reihenfolge angeordnet sind und in beiden Seitenflächen münden, dass an den Seitenflächen um 180° wendbare Anschlussplatten anbringbar sind, die mit mindestens einem Verbindungskanal versehen sind, der auf der am Verteilerblock anschließenden Seite asymmetrisch zu einer Mittellängsebene, aber im Rastermaß der Mündungen der Medienkanäle mündet, und dass an jeder Anschlussplatte die Verbindungsstücke bis zu den Sprühdüsen angeschlossen sind, so dass jede Sprühkreisgruppe wahlweise an einen der Durchgangskanäle und an die in diesem gesteuerte Medienzufuhr anschließbar ist.

Durch diese Ausgestaltung wird es zum einen möglich, von vier Sprühkreisen beispielsweise nur einen Sprühkreis der festen Formenhälfte, alle anderen drei Sprühkreise dagegen der beweglichen Formenhälfte zuzuordnen, um beispielsweise zeitlich versetzt gewisse Formenteile nacheinander oder auch mehrfach zu besprühen oder bei Verwendung von Blasluft wieder trocken zu blasen.

Durch die Unterteilung des Anschlussstückes in mehrere Verteilerbiöcke, die untereinander sitzen, wird es auch möglich, mit Hilfe der an die Verteilerblöcke anschließbaren Anschlussplatten und eventueller Verlängerungen den Abstand der Sprühdüsengruppen zu den Verteilerblöcken unterschiedlich zu gestalten, so dass die sowohl der festen wie auch der beweglichen Formenhälfte zugewandten Sprühdüsenmodule nicht in einer gemeinsamen und parallel zur Mittelebene verlaufenden Ebene, sondern abschnittsweise unter oder übereinander in Ebenen anzuordnen sind, die unterschiedlich weit vom verfahrbaren Arm und von dem zugeordneten am Arm angesetzten Verteilerblock verlaufen. Diese Ausgestaltung wiederum vermeidet den Einsatz von Verlängerungsrohren vollständig und erlaubt die individuelle Anpassung der Sprühkopfmodule gegenüber den Formenhälften zusätzlich zu der Möglichkeit, die Sprühbeaufschlagung individuell auszuwählen.

In Weiterbildung der Erfindung kann jede Anschlussplatte mit zwei Verbindungskanälen versehen sein, die asymmetrisch zu der Mittellängsebene münden, wobei vor der zugeordneten Sprühkreisgruppe der Sprühdüsen ein Flanschblock angesetzt sein kann, mit dem einer der beiden Verbindungskanäle als Versorgungskanal für die Sprühkreisgruppe selektiert wird.

In weiterer Ausgestaltung können zwischen Anschlussplatte und Flanschblock wahlweise Verbindungsblöcke eingesetzt sein, um den Abstand der Sprühkreisgruppen vom zugeordneten Anschlussstück einzustellen. Es wird daher möglich, alle Anschlussplatten und Flanschblöcke weitgehend identisch auszubilden und die Abstandsanordnung über in sich ebenfalls identisch ausgebildete Verbindungsblöcke zu erreichen. Die erforderlichen Teile für den Aufbau des Sprühblockes bleiben daher in ihrer Zahl beschränkt.

In weiterer Ausgestaltung können in jedem Verteilerblock Durchgangskanäle zur Führung von Trocknungsluft vorgesehen sein und gesonderte Anschlussplatten zum Anschluss von Blasluftdüsen verwendet werden. Es wird auf diese Weise möglich, wie vorher schon angedeutet, Formenhälften oder auch Formenteile trocken zu blasen.

In einfacher Ausgestaltung können die Verbindungsblöcke mit Durchgangsbohrungen versehen werden, die symmetrisch zu einer Mittellängsebene verlaufen. Der Mündungsanschluss solcher symmetrischen Kanäle in den Seitenflächen wird dadurch einfach. In Ausgestaltung der Erfindung kann jeder Flanschblock mit einem Anschlusskanal versehen werden, der in der am Verbindungsblock angrenzenden Seite asymmetrisch zu einer Mittellängsebene aber im Abstand der Durchgangsbohrung im Verbindungsblock angeordnet ist. Diese Ausgestaltung erlaubt ebenfalls den Anschluss eines Flanschblockes in zwei um 180° versetzten Stellungen, so dass auch auf diese Weise eine Selektion eines Versorgungskanals möglich ist.

In weiterer Ausgestaltung der Erfindung können die zu einer Sprühkreisgruppe zusammengefassten Sprühdüsen an einer Sprühleiste angebracht sein, was den Zusammenbau des Sprühkopfes erleichtert. Die Sprühleisten können dabei in vorteilhafter Weise aus mehreren Teilstücken zusammengesetzt sein, die mit fluchtend zueinander ausgerichteten Medienkanälen versehen sind. Auch die Größe einer Sprühleiste ist dadurch in einfacher Weise individuell aufzubauen.

Die Teilstücke können dabei mit abgewinkelten Endbereichen versehen sein, wobei die Endbereiche von Winkelstücken gebildet sein können, die endseitig an gerade Teilstücke angesetzt sind. Diese Ausgestaltung wiederum ermöglicht es auch, die Sprühleisten aus im Winkel zueinander stehenden Sprühleistenteilen aufzubauen, was die Anpassungsmöglichkeiten an die Formenhälften noch verbessert.

Schließlich ist es in Ausgestaltung der Erfindung möglich, dass zwischen einem Verteilerblock und einem Flanschblock ein oder mehrere Verbindungsstücke zur Einstellung des Abstandes der Sprühkreisgruppe vom zentralen Anschlussstück vorgesehen werden. Die vorher bereits erwähnte Anpassung der Sprühkreisgruppen an die Formen, die sozusagen stockwerkartig möglich ist, kann dadurch erleichtert werden.

Die Erfindung ist in der Zeichnung anhand von Ausführungsbeispielen dargestellt und wird im folgenden erläutert. Es zeigen:
- Fig. 1: eine schematische Darstellung des Aufbaus eines erfindungsgemäßen Sprühkopfes,
- Fig. 2: eine Explosionsdarstellung eines Ausführungsbeispiels eines nach der Erfindung aufgebauten Sprühkopfes,
- Fig. 3: die schematische Darstellung eines Schnittes durch einen Teil des Sprühkopfes der Fig. 2 längs der Ebene III,
- Fig. 4: eine Darstellung ähnlich Fig. 3 jedoch bei einer Variante einer Sprühkopfanordnung und
- Fig. 5: die Darstellung einer von der Sprühdüsenanordnung der Fig. 2 abweichenden Anordnung von Sprühdüsen an einem der stockwerkweise untereinander sitzenden Verteilerblöcke.

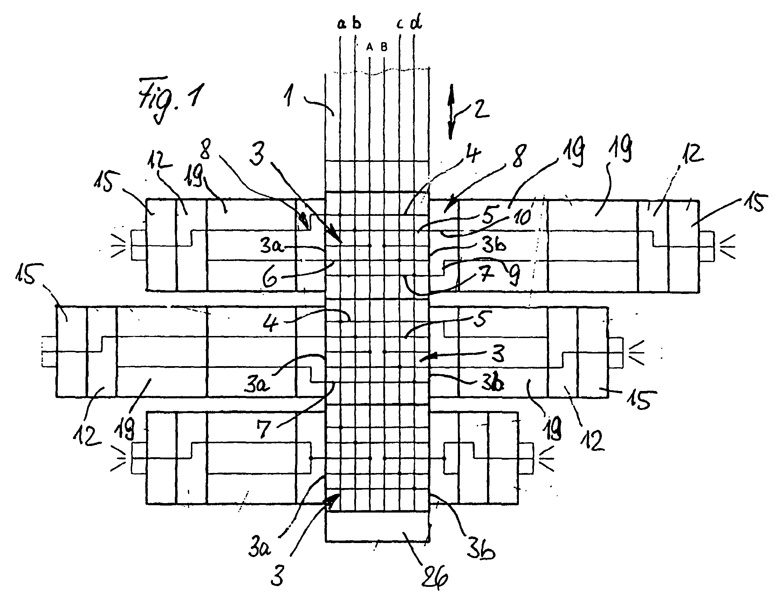

Die Fig. 1 zeigt schematisch den Aufbau eines Sprühkopfes nach der Erfindung. Ein im Sinn der Pfeile 2 beweglich geführter Arm 1 ist an seinem unteren Ende mit mehreren angesetzten Verteilerblöcken 3 versehen, die alle identisch ausgebildet und zueinander fluchtend in der Bewegungsrichtung 2 des Armes angeordnet sind. Alle Verteilerblöcke 3 sind dicht untereinander und dicht an dem Anschlussende des Armes 1 angeordnet.

Der Arm 1, der in bekannter und daher nicht näher dargestellter Weise mit einem steuerbaren Antrieb verbunden ist, weist in seinem Inneren die schematisch nebeneinander gezeichneten Durchgangskanäle a, b, c, d und A und B auf. Diese Durchgangskanäle a bis d sind dabei jeweils mit Trennmittel und Druckluft beaufschlagt, die von außen gesteuert wird. Die Durchgangskanäle A und B sind beim gezeigten Beispiel ausschließlich mit Druckluft beaufschlagt, die als Blasluft zum Trocknen der Formen verwendet werden soll.

Jeder der Verteilerblöcke 3 weist eine entsprechende Anzahl von Durchgangskanälen auf, die mit den Durchgangskanälen a bis d und A und B des Armes 1 in Verbindung stehen. In bekannter Weise sind zu diesem Zweck die Verteilerblöcke 3 untereinander mit ihren Anschlussflächen dicht verbunden und der oberste Verteilerblock 3 liegt dicht am unteren Stirnende des Armes 1 an.

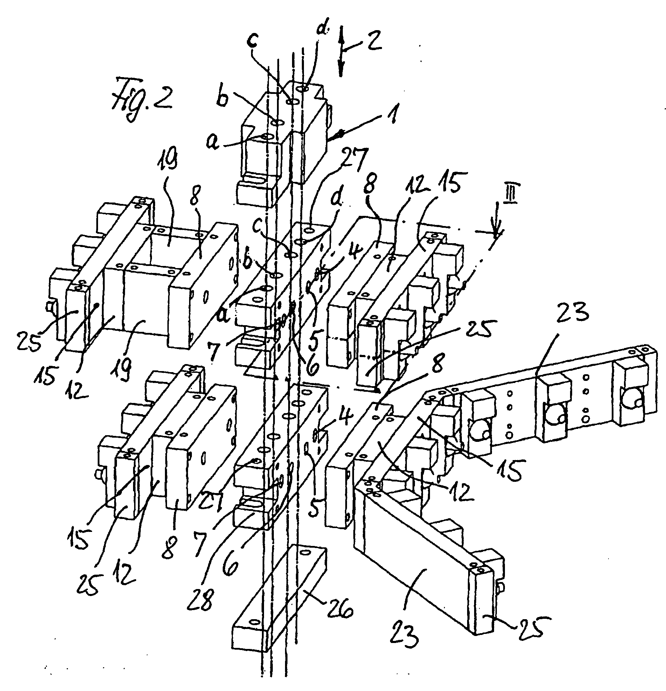

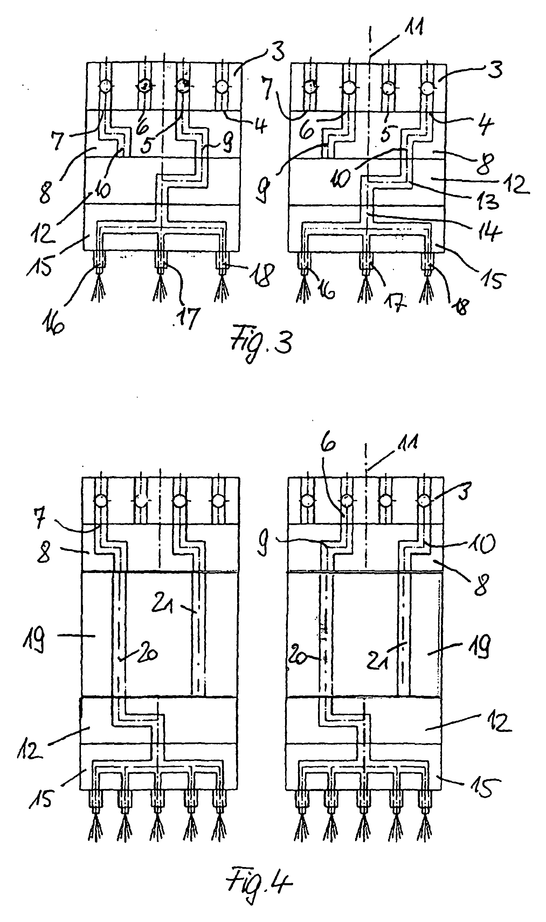

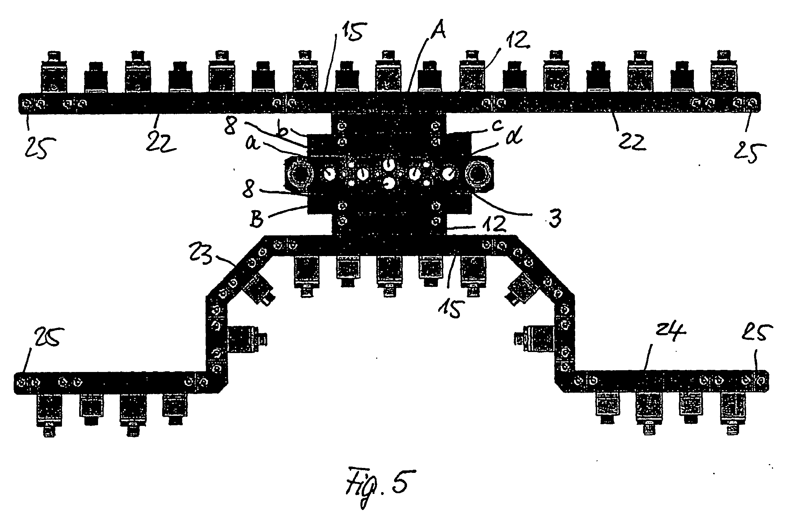

Von den Durchgangskanälen in den Verteilerblöcken 3, die mit den gleichen Bezugszeichen versehen sein sollen, wie sie für die Durchgangskanäle des Armes 1 gewählt sind, zweigen seitlich die Medienkanäle 4, 5, 6 und 7 ab, die in den gleich benannten Öffnungen in den Seitenwänden 3a und 3b jedes Verteilerblockes münden. An diesen Seitenflächen 3a und 3b jedes Verteilerblockes 3 sind nun Anschlussplatten 8 angesetzt, die beim Ausführungsbeispiel mit jeweils zwei Verbindungskanälen 9 und 10 versehen sind die, wie insbesondere den Fig. 3 und 4 entnehmbar ist, asymmetrisch zu einer durch den Verteilerblock 3 und die Anschlussplatte 8 verlaufenden Mittellängsebene 11 münden, aber jeweils so, wie auch die Fig. 3 oder die Fig. 4 zeigt, dass die Mündung jeweils des Kanals 9 oder 10 im Rastermaß der Mündungen 4, 5, 6 und 7 des Verteilerblockes 3 verlaufen. Wie ohne weiteres insbesondere der Fig. 3 entnommen werden kann, erlauben die Anschlussplatten 8 daher den Anschluss zumindest eines der Verbindungskanäle 9 oder 10 an einen der Medienkanäle 4 bis 7. Wie die Fig. 3 zeigt, kann die Anschlussplatte 8 um 180° verdreht am Verteilerblock 3 angebracht werden, so dass einmal der Verbindungskanal 9 am Medienkanal 5 und der Verbindungskanal 10 am Medienkanal 7 und zum anderen der Verbindungskanal 9 am Medienkanal 6 und der Verbindungskanal 10 am Medienkanal 4 zur Anlage kommt, wobei die Anschlussplatten 8 alle gleich ausgebildet sind.

An den Anschlussplatten 8 können nun nach Fig. 3 Flanschblöcke 12 angeschlossen werden, die wiederum mit einem Verbindungskanal 13 versehen sind, der auf der zur Anschlussplatte 8 hin liegenden Seite außerhalb der Mittellängsebene 11 mündet aber so, dass er mit den Mündungen der Kanäle 9 oder 10 zur Deckung kommt, auf der entgegengesetzten Seite aber in der Mittellängsebene 11 mündet und dort mit einem Mittelanschluss 14 einer Sprühleiste 15 zur Deckung kommt, die mit drei Sprühdüsen 16, 17 und 18 versehen werden kann. Die beiden nebeneinander liegenden Darstellungen nach Fig. 3 machen nun deutlich, dass je nach Lage der Anschlussplatte 8 diese Sprühdüsen 16, 17, 18 mit dem Medienkanal 4 oder mit dem Medienkanal 5 in Verbindung gebracht werden können. Dies bedeutet, dass dann, wenn die ungeraden Medienkanäle 5, 7 unterschiedlich zu den geraden Medienkanälen 4, 6 mit Trennmittel und Druckluft beaufschlagt werden, die Sprühdüsen 16, 17 und 18 an einen anderen Sprühkreis angeschlossen sind. Durch Wahl der Lage der Anschlussplatten 8 ist es daher in einfacher Weise möglich, Sprühleisten 15 und deren Sprühdüsen wahlweise an den einen oder anderen Sprühkreis anzuschließen, wodurch auch der Sprühzeitpunkt bestimmbar ist.

Die Fig. 1 zeigt schematisch, dass die Flanschblöcke 12 nicht, wie in Fig. 3 gezeigt, unmittelbar an die Anschlussplatten 8 anschließen müssen. Vielmehr ist es möglich, wie auch in Fig. 2 und in Fig. 4 dargestellt, die Flanschblöcke 12 über Verbindungsblöcke 19 mit den Anschlussplatten 8 zu verbinden, wobei in den Verbindungsblöcken 19 Verbindungskanäle 20, 21 verlaufen, die wiederum so angelegt sind, dass sie parallel und spiegelsymmetrisch zu der Mittelebene 11 verlaufen. Über mindestens einen dieser Kanäle, beim Ausführungsbeispiel nach Fig. 4 über den Verbindungskanal 20, erfolgt daher je nach Lage der Anschlussplatte 8 der Anschluss zum Medienkanal 7 oder zum Medienkanal 6. Fig. 1 zeigt, dass auch mehrere Verbindungsstücke 19 zwischen Anschlussplatte 8 und Flanschblock 12 eingesetzt werden können, so dass dadurch der Abstand der Sprühleisten 15 vom zugeordneten Verteilblock 3 mehr oder weniger groß angelegt werden kann. Fig. 2 - auch Fig. 1 schematisch - machen dabei deutlich, dass dadurch stockwerksweise jeweils in den senkrecht zur Bewegungsrichtung 2 verlaufenden Ebenen, die durch die Verteilerblöcke 3 verlaufen, Sprühleistenanordnungen erreicht werden können, die nicht in einer parallel zur Bewegungsrichtung 2 verlaufenden Ebene liegen, sondern stockwerksweise unterschiedlich von der Mitte des Tragarms 1 bzw. der Verteilerblöcke 3 entfernt sind.

Die Fig. 5 schließlich zeigt, dass es auch möglich ist, jeweils an den Außenenden der Sprühleisten 15 im Winkel zu der Sprühleiste 15 stehende Sprühleisten 23 anzubringen, die auch noch durch entsprechende Eckstücke zu Sprühleisten 24 erweiterbar sind. Auch die Verlängerung einer Sprühleiste 15 an ihren beiden Enden durch Sprühleisten 22, die in ihrer Ausführung den Sprühleisten 15 entsprechen können, ist möglich. Alle Sprühleisten 15, 22 oder 24 sind außen durch Verschlussstücke 25 abzuschließen. Dies gilt auch für die Durchgangskanäle a, b, c und d, die am untersten Verteilerblock 3 mit einem Abschlussteit 26 zu verschließen sind. Wie andeutungsweise aus Fig. 2 hervorgeht, werden die Verteilblöcke 3 über Schraubbolzen untereinander zusammengehalten, die durch Öffnungen 27 bzw. durch Flanschteile 28 hindurch bis zur Abschlussleiste 26 geführt sind.

## Patentansprüche

1. Sprühkopf für ein Formensprühwerkzeug mit an einem verfahrbaren Arm (1) anbringbaren Anschlussstück, mit mehreren Durchgangskanälen (a, b, c, d) jeweils für die gesteuerte Zufuhr der Sprühmedien sowie mit vom Anschlussstück aus quer zur Bewegungsrichtung (2) des Armes (1) abragenden, zu in Sprühkreisgruppen zusammengefassten Sprühdüsen (15) führenden Verbindungsstücken (8, 19, 12), die über Verbindungskanäle mit den Durchgangskanälen des Anschlussstückes in Verbindung stehen, **dadurch gekennzeichnet, dass** das Anschlussstück aus mehreren in der Bewegungsrichtung (2) des Armes (1) aneinander setzbaren Verteilerblöcken (3) aufgebaut ist, in denen von allen Durchgangskanälen (a, b, c, d) quer abzweigende Medienkanäle (4 bis 7) in einer vorbestimmten Reihenfolge angeordnet sind und in beiden Seitenflächen (3a, 3b) münden, dass an den Seitenflächen (3a, 3b) um 180° wendbare Anschlussplatten (8) anbringbar sind, die mit mindestens einem Verbindungskanal (9, 10) versehen sind, der auf der am Verteilerblock (3) anschließenden Seite asymmetrisch zu einer Mittellängsebene (11) aber im Rastermaß der Mündungen der Medienkanäle (4 bis 7) mündet, und dass an jeder Anschlussplatte (8) die Verbindungsstücke (12, 19) bis zu den Sprühdüsen (15) angeschlossen sind, so dass jede Sprühkreisgruppe wahlweise an einen der Durchgangskanäle und an die in diesen gesteuerte Medienzufuhr anschließbar ist.

2. Sprühkopf nach Anspruch 1, **dadurch gekennzeichnet, dass** jede Anschlussplatte (8) mit zwei Verbindungskanälen (9, 10) versehen ist, die asymmetrisch zu der Mittellängsebene (11) münden und dass vor der zugeordneten Sprühkreisgruppe der Sprühdüsen (15) ein Flanschblock (12) angesetzt ist, mit dem einer der beiden Verbindungskanäle (9, 10) als Versorgungskanal für die Sprühkreisgruppe selektiert wird.

3. Sprühkopf nach Anspruch 2, **dadurch gekennzeichnet, dass** zwischen Anschlussplatte (8) und Flanschblock (12) wahlweise Verbindungsblöcke (19) eingesetzt sind, um den Abstand der Sprühkreisgruppen (15) vom zugeordneten Verteilerblock (3) einzustellen.

4. Sprühkopf nach Anspruch 1, **dadurch gekennzeichnet, dass** in jedem Verteilerblock (3) Durchgangskanäle (A, B) zur Führung von Trocknungsluft vorgesehen sind, und dass gesonderte Anschlussplatten (29) zum Anschluss von Blasluftdüsen (30) vorgesehen sind.

5. Sprühkopf nach Anspruch 3, **dadurch gekennzeichnet, dass** die Verbindungsblöcke (19) mit Durchgangsbohrungen (20, 21) versehen sind, die symmetrisch zu einer Mittellängsebene (11) verlaufen.

6. Sprühkopf nach Anspruch 5, **dadurch gekennzeichnet, dass** jeder Flanschblock (12) mit einem Anschlusskanal (13) versehen ist, der in der am Verbindungsblock (19) oder an der Anschlussplatte (8) angrenzenden Seite fluchtend zu den Verbindungskanälen dieser Teile, auf der zur Sprühleiste hin weisenden Seite jedoch symmetrisch zu der Mittellängsebene (11) mündet.

7. Sprühkopf nach Anspruch 1, **dadurch gekennzeichnet, dass** die zu einer Sprühkreisgruppe zusammengefassten Sprühdüsen (16, 17, 18) an einer Sprühleiste (15) angebracht sind.

8. Sprühkopf nach Anspruch 7, **dadurch gekennzeichnet, dass** die Sprühleisten (15) mit anderen Sprühleisten (22, 23) zu Sprühleisten größerer Abmessungen zusammengesetzt sind, wobei jedes Teilstück mit Medienkanälen versehen ist, die zu den Medienkanälen im benachbarten Teilstück fluchten.

9. Sprühkopf nach Anspruch 8, **dadurch gekennzeichnet, dass** Teilstücke (23) mit abgewinkelten Endbereichen vorgesehen sind.

10. Sprühkopf nach Anspruch 9, **dadurch gekennzeichnet, dass** die abgewinkelten Endbereiche von Winkelstücken gebildet sind, die endseitig an gerade Teilstücke angesetzt sind.

## Claims

1. Spray head for a mold spraying tool with a terminal piece attachable to a movable arm (1), having a plurality of through-passages (a, b, c, d) for the controlled feeding of the spray media, and connecting pieces (8, 12, 19) extending from the terminal piece across the direction of movement (2) of the arm (1) and combined together in spray circuit groups, which connecting pieces are in communication through connecting passages with the through-passages of the terminal piece, **characterized in that** the terminal piece is composed of a plurality of distributor blocks (3) which can be placed against one another in the direction of movement (2) of the arm (1) and in which media passages (4 to 7) branching transversely from all through-passages (a, b, c, d) are arranged in a predetermined order and open into both lateral surfaces (3a, 3b), that connecting plates (8) which can turn 180° can be attached to the lateral surfaces (3a, 3b) and are provided with at least one connecting passage (9, 10) which opens on a side following the distributor block (3) according to a pitch of the mouths of the media passages (4 to 7) and asymmetrically to a longitudinal central plane (11), and that on each connection plate (8) the connecting pieces (12, 19) are connected up to the spray nozzles (15), so that each spray circuit group can be connected selectively to one of the through-passages and to the media feed controlled therein.

2. Spray head according to claim 1, charaterized in that each connection plate (8) is provided with two connecting passages (9, 10) which open asymmetrically to the longitudinal central plane (11), and that a flange block (12) is attached in front of the associated spray circuit group of the spray nozzles (15), by which one of the two connecting passages (9, 10) is selected as a passage for supplying the spray circuit group.

3. Spray head according to claim 2, charaterized in that between the connection plate (8) and flange block (12) connection blocks (19) are selectively inserted in order to adjust the distance of the spray circuit groups (15) from the associated distributing block (3).

4. Spray head according to claim 1, charaterized in that in each distributor block (3) through-passages (A, B) are provided for carrying drying air, and that separate connecting plates (29) are provided for connecting blast air nozzles (30).

5. Spray head according to claim 3, charaterized in that the connecting blocks (19) are provided with through-bores (20, 21) which are symmetrical with a central longitudinal plane (11).

6. Spray head according to claim 5, charaterized in that each flange block (12) is provided with a connecting passage (13) which opens in the side adjoining the connecting block (19) or on the side adjoining the connection plate (8) in line with the connecting passages of these parts, but opens on the side facing the spray bar in symmetry with the central longitudinal plane (11).

7. Spray head according to claim 1, charaterized in that the spray nozzles (16, 17, 18) combined in a spray circuit group are attached to a spray bar (15).

8. Spray head according to claim 7, charaterized in that the spray bars (15) are combined with other spray bars (22, 23) to spray bars of larger size, each part thereof being provided with media passages which align with the media passages in the adjacent part.

9. Spray head according to claim 8, charaterized in that parts (23) are provided with angled end portions.

10. Spray head according to claim 9, charaterized in that the angled end portions are formed by corner pieces which are attached to the end of straight parts.

## Revendications

1. Tête de pulvérisation pour un outil de pulvérisation de moule comprenant une pièce de raccordement pouvant être montée sur un bras mobile (1), avec plusieurs canaux de passage (a, b, c, d) respectivement pour l'apport commandé des liquides de pulvérisation ainsi que des pièces de liaison (8, 19, 12) faisant saillie depuis la pièce de raccordement perpendiculairement à la direction de mouvement (2) du bras (1) et menant vers des buses de pulvérisation (15) réunies en groupes de circuits de pulvérisation, et qui se trouvent en liaison avec les canaux de passage de la pièce de raccordement par l'intermédiaire de canaux de liaison, **caractérisée en ce que** :
- la pièce de raccordement est construite à partir de plusieurs blocs distributeurs (3) pouvant être placés l'un contre l'autre dans la direction de mouvement (2) du bras (1) et dans lesquels des canaux de liquide (4 à 7) bifurquant perpendiculairement de tous les canaux de passage (a, b, c, d) sont disposés dans un ordre prédéterminé et s'embouchent dans deux surfaces latérales (3a, 3b) ;
- il est possible de monter des plaques de raccordement (8) pouvant tourner de 180 degrés sur les surfaces latérales (3a, 3b) et comportant au moins un canal de liaison (9, 10) qui débouche sur le côté venant se joindre sur le bloc distributeur (3) de manière asymétrique par rapport à un plan longitudinal médian (11), mais dans la mesure de trame des embouchures des canaux de liquide (4 à 7) ; et
- les pièces de liaison (12, 19) sont raccordées sur chaque plaque de raccordement (8) jusqu'aux buses de pulvérisation (15) de sorte que chaque groupe de circuits de pulvérisation peut être raccordé au choix à l'un des canaux de passage et à l'apport de liquide commandé dans celui-ci.

2. Tête de pulvérisation selon la revendication 1, **caractérisée en ce que** chaque plaque de raccordement (8) comporte deux canaux de liaison (9, 10) qui débouchent de manière asymétrique par rapport à un plan longitudinal médian (11), et **en ce qu'**un bloc de bride (12) est rabouté devant le groupe de circuits de pulvérisation associé des buses de pulvérisation (15), avec lequel l'un des deux canaux de liaison (9, 10) est sélectionné comme canal d'alimentation pour le groupe de circuits de pulvérisation.

3. Tête de pulvérisation selon la revendication 2, **caractérisée en ce que** des blocs de liaison (19) sont mis en place au choix entre la plaque de raccordement (8) et le bloc de bride (12) pour ajuster la distance des groupes de circuits de pulvérisation (15) envers le bloc distributeur associé (3).

4. Tête de pulvérisation selon la revendication 1, **caractérisée en ce que** des canaux de passage (A, B) sont prévus dans chaque bloc distributeur (3) pour le guidage d'air de séchage et **en ce que** des plaques de raccordement spéciales (29) sont prévues pour le raccordement de buses d'air de soufflage (30).

5. Tête de pulvérisation selon la revendication 3, **caractérisée en ce que** les blocs de liaison (19) sont munis de perçages de passage (20, 21) qui s'étendent symétriquement par rapport à un plan longitudinal médian (11).

6. Tête de pulvérisation selon la revendication 5, **caractérisée en ce que** chaque bloc de bride (12) est muni d'un canal de raccordement (13) qui débouche sur le côté limitrophe sur le bloc de liaison (19) ou sur la plaque de raccordement (8), en alignement par rapport aux canaux de liaison de ces pièces, sur le côté montrant vers le listeau de pulvérisation, mais symétriquement par rapport au plan longitudinal médian (11).

7. Tête de pulvérisation selon la revendication 1, **caractérisée en ce que** les buses de pulvérisation (16, 17, 18) réunies en groupes de circuits de pulvérisation sont montées sur un listeau de pulvérisation (15).

8. Tête de pulvérisation selon la revendication 7, **caractérisée en ce que** les listeaux de pulvérisation (15) sont assemblés avec d'autres listeaux de pulvérisation (22, 23) pour former des listeaux de pulvérisation de dimensions plus grandes, sachant que chaque pièce partielle est munie de canaux à liquide qui sont en alignement par rapport aux canaux à liquide dans la pièce partielle avoisinante.

9. Tête de pulvérisation selon la revendication 8, **caractérisée en ce que** des pièces partielles (23) sont prévues avec des régions terminales coudées.

10. Tête de pulvérisation selon la revendication 9, **caractérisée en ce que** les régions terminales coudées sont formées par des pièces en angle qui sont raboutées à des pièces partielles droites.
